Europäisches Patentamt

European Patent Office

Office européen des brevets

(19)

(11) Publication number: **0 092 304**
**B1**

(12) **EUROPEAN PATENT SPECIFICATION**

(45) Date of publication of patent specification: **28.05.86**

(51) Int. Cl.⁴: **C 03 B 37/16**

(21) Application number: **83301096.0**

(22) Date of filing: **01.03.83**

(54) Apparatus for cleaving an optical fiber.

(30) Priority: **20.04.82 US 370039**

(43) Date of publication of application:
**26.10.83 Bulletin 83/43**

(45) Publication of the grant of the patent:
**28.05.86 Bulletin 86/22**

(84) Designated Contracting States:
**BE CH DE FR GB IT LI SE**

(56) References cited:
**EP-A-0 010 782**
**WO-A-83/02269**
**FR-A-2 369 222**
**FR-A-2 445 302**
**GB-A-2 046 242**
**GB-A-2 052 790**
**US-A-4 274 572**

(73) Proprietor: **G & H Technology, Inc.**
**1649 17th Street**
**Santa Monica, California 90404 (US)**

(72) Inventor: **Balyasny, Marik**
**7358 Ruffner Avenue**
**Van Nuys California 91406 (US)**
Inventor: **Lovell, William F.**
**10900 Palms Boulevard 204**
**Los Angeles California 90046 (US)**

(74) Representative: **Warden, John Christopher et al**
**R.G.C. Jenkins & Co. 12-15, Fetter Lane**
**London EC4A 1PL (GB)**

Courier Press, Leamington Spa, England.

## Description

The present invention relates generally to apparatus for cleaving an optical fiber and, more particularly, to such an apparatus whic accomplishes the cleaving or cutting of the fiber unaccompanied by appreciable bending or twisting of the fiber and thereby producing a fiber end surface that is precisely faced-off at 90 degrees to the fiber longitudinal axis.

Optical fibers measuring in the thousandths of an inch (1 inch = 2.54 cm.) in diameter and constructed of plastic or glass are utilised in many ways for the transmission of an optical signal over extensive distances. It is a fundamentally important requirement for the highly efficient receipt of an optical signal by the fiber and the continued transmission of the optical signal to processing equipment that the end faces of the fiber be faced off very precisely at 90 degrees to the fiber axis. For example, where it is necessary to splice or interconnect the ends of two fibers, if their respective end faces are skewed to even a few degrees this will result in a substantial loss in transmission of the optical signal across the junction. In addition, a fully satisfactory cut or cleavage of the fiber should leave the end face flat for the same reason.

According to one known technique of cleaving a fiber, the fiber is scored on its peripheral surface about the entire circumference in a plane perpendicular to the fiber longitudinal axis. After scoring the fiber is then pulled manually by the operator along its longitudinal direction until the fiber separates at the scored line. Achievement of perpendicularity of a fiber end face to the longitudinal end face by this technique is not fully satisfactory for present-day low-loss requirements and can vary up to as much as 3 degrees from the perpendicular. Also, separating the fiber pieces at the score line by the operator pulling on the fiber can produce damage to the fiber cleaved surface by dragging the cutter across the surface. Still further, there is the distinct possibility of inducing twist into the fiber which can result in a distortion of the newly-cut optical fiber end.

Various methods have been described for cleaving optical fibers. Thus FR-A-2369222 describes twisting the fiber while holding it against the scoring means and FR-A-2445302 and GB-A-2046242 describe circumscribing a cutter around an optical fiber. In all these cases the fiber is held clamped but not under tension. In the more recent described methods of US-A-4274572 and W083/0229, published on 7th July, 1983, and thus falling within the terms of Article 54(3) EPC, the fiber is given a cross cut while under a pre-tensioning force. All of these methods can give rise to imperfections in the cleavage surface. One of the characteristics of the present invention is the use of a circumscribing cutter while the fiber is held under a pre-tensioning force. This results in a very cleanly cut surface. Other features of the inventive apparatus enable the construction of a precision instrument which is easily carried in the hand and used in the field.

According to the invention there is provided apparatus for cleaving an optical fiber comprising:

shaft means having an axially extending opening therethrough for receiving a fiber therein;

a transfer block having a fiber support surface thereon;

first spring means resiliently urging the transfer block away from the shaft means;

lever means pivotally mounted to said transfer block for selectively moving a fiber holding pad toward and away from the transfer block support surface;

second spring means interconnecting the lever means and the transfer block resiliently urging the fiber holding pad toward the support surface;

means limiting movement of a fiber in the shaft means to permit pre-tensioning of the fiber by said first spring means when held by said fiber holding pad; and

scoring means rotatably mounted on said shaft means for contacting the circumferential periphery of the fiber and effecting a single score line completely around the fiber in a plane that is precisely perpendicular to the fiber longitudinal axis; the lever means, transfer block and both spring means being arranged such that the fiber holding pad and the transfer block can be operated by one hand.

In accordance with an embodiment of the invention, the fiber scoring apparatus is especially adapted for hand-held operation. A rotor has an axial opening through which the bare fiber end portion extends. The hand-held mounting to which the rotor is secured also includes a flat support lying in the same plane as the rotor axial opening and spaced from the rotor. A finger operated means raises a jaw away from the support allowing the bare fiber extending across the space intervening the rotor and flat support to come to rest on the support. Actuation of the means also moves the support against a compression spring in a direction toward the rotor. Release of the finger operated means simultaneously effects engagement of the bare fiber between the jaw and support, and causes the bare fiber to be placed in tension by the compression spring.

A sharp pointed scribing or scoring tool is mounted onto the rotor and extends into the space between the rotor and support for scoring the bare fiber throughout a full 360 degrees.

In the drawings:

Figures 1 and 2 are end and side elevational views of an embodiment.

Figure 3 is a side elevational, sectional view of the cleaving apparatus of Figure 2.

Figure 4 is an end sectional view taken along the line 10—10 of Figure 3.

Figure 5 is an enlarged, end elevational, partially schematic view of a fiber being cleaved by the apparatus of Figure 3.

Figure 6 is a side elevational view showing a fiber immediately after cleaving.

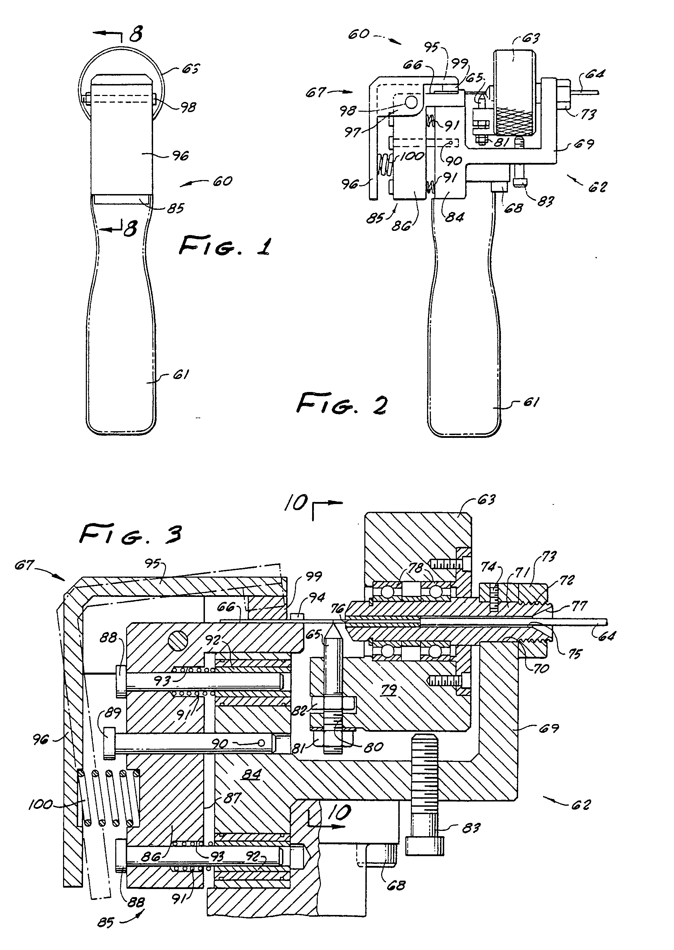

In Figures 1 and 2 optical fiber cleaving apparatus is identified generally as at 60. More particularly, the apparatus includes a handle 61 on an outer end of which there is affixed a generally U-shaped yoke or mounting means 62. One leg of the mounting means 62 has a rotor 63 rotatably mounted thereto and which rotor includes an axial opening for receiving a fiber 64 to be cleaved. A scriber or scoring means 65 moves with the rotor and is located just outwardly of the rotor in the space between the two yoke arms. Carried by the other arm of the yoke 62 is a relatively flat support surface 66 with a clamping meaans 67 that can be operated by the hand off the operator to selectively engage the outer end of the fiber 64.

In a way that will be more particularly described, spring means are incorporated within the apparatus for placing the fiber in tension at the same time that the fiber is gripped by the means 67. After the fiber is suitably retained within the apparatus, the rotor 63 is rotated 360 degrees whereby the scriber or scoring means 65 produces a score line completely about the fiber and, upon this being achieved, the tension induced in the fiber causes the fiber to cleave along the scoring line.

For the detailed description that follows of the scoring apparatus of this embodiment, reference is made particularly to Figure 3. The support means 62 is generally U-shaped giving the appearance of a yoke with the cross bar being affixed to the upper end of handle 61 by one or more threaded members 68. One upstanding arm 69 of the yoke forms a wall member substantially parallel to the handle 61, and includes an opening 70 within which a shaft 71 is fittingly received at substantially 90 degrees to the arm. The outer end of shaft 71 is threaded as at 72 for receiving a nut 73 to secure the shaft firmly to arm 69. A pin 74 secures the shaft against rotation while the nut 73 is tightened. The shaft also includes an axial opening 75, 76 passing therethrough having an entrance end portion 75 with a diameter that is substantially larger than optical fiber complete with its protective outer coating, and an exit end portion 76 with a diameter for fittingly receiving a bare optical fiber (i.e., with protective buffer coating removed). The entrance end of the shaft opening via which the fiber is inserted has an enlarged tapered mouth 77 for aiding and guiding the fiber.

The rotor 63 is of generally disclike construction and rotatably journaled onto the axle 71 via a pair of ball bearing races 78. A portion of the rotor 63 extends outwardly from the inwardly directed major face to form a bifurcated member 79 through which a common opening 80 is formed at 90 degrees to the openings 75 and 76 in the shaft. The scriber or scoring means 65 is a rodlike member having one end formed into a suitable point and which is inserted through the opening 80. The opposite end of the scriber is threaded for receipt on first and second nuts 81 and 82 as shown. By proper adjustment of the nuts 81 and 82, the scoring means or sharp point of the scriber 65 may be aligned and adjusted vertically as shown in Figure 9 into proper scoring position.

A threaded stop screw 83 extends through the cross bar portion of yoke 62 immediately adjacent the side wall 69 for selectively contacting the rotor 63 to prevent it against rotation. This is advisable when transporting the device, for example.

The other upstanding arm 84 of the yoke 62 extends above the cross arm parallel to the arm 69, and also slightly below the cross arm of the yoke thereby forming an inside corner which is mounted within a complementary shaped portion of the handle 61. A generally L-shaped transfer block 85 is constructed to fit onto the upstanding arm 84 of the yoke 62. More particularly, the transfer block has one arm 86 with an internal face 87 of dimensions and geometry identical to the outer wall of 84. Three transverse openings are formed in 86 accommodating two guide pins 88 with large external heads and a third pin 89 limiting the travel of block 85. A set screw 90 (Figure 2) enables maintaining the position of the central pin 89 and thus the travel of block 85. There are three openings in yoke arm 84 which align, respectively, with the openings in 86 for receiving the ends of pins 88 and 89. The pins 88 include compression springs 91 about the uppermost and the lowermost pin as shown in Figure 3 which serve to guide the transfer block 85 in a resilient spaced relationship to the outer surface of yoke arm 84. More particularly, the pin openings located in the arm 84 include slide bushings 92 against which one end of the springs can exert their force while the other ends of the springs are each located within a well 93 in the surface 87.

The upwardly directed support surface 66 of the transfer block horizontal arm is substantially flat and coplanar with the opening 76 in shaft 71. In addition, at its uppermost end portion the flat surface includes a V-shaped notch guide means 94 that is colinear with the opening 76 for a purpose to be shown.

Preferably, the pins 88 and 89 are slidingly received within the openings in yoke arm 84 and tightly received in the transfer block openings. In this manner, the transfer block is movable solely along a path toward and away from the yoke arm 84. The large head of the pin 89 serves as a limit stop in a way that will be described.

The clamping means 67 consists generally of an L-shaped member, one arm 95 of which is adapted to extend over the support surface 66 of the transfer block, and the other arm 96 extends generally parallel to the outside surface of the block. A pair of plates 97 (Figure 2) integral with arms 95, 96 partially enclose the sides of the L-shaped member and include a pivot pin 98 passing therethrough which is rotatably received within the upper portion of the block 85. A holding pad 99 is affixed to the inner end surface of arm 95 and is located immediately opposite the flat support area 66 of the transfer block (Figures 2 and 3). A compression spring 100 has one end received within a declivity in the inner surface of the L-shaped member arm 96 with the other spring end received in a similarly shaped declivity in the outside surface of the transfer block 85 (Figure 3). In this way, the spring 100 acts to resiliently urge the fiber holding pad 99 in contact with the flat support surface 66. It is also to be noted that when the arm 96 of the L-shaped member 67 is depressed towards transfer member 85, the movement of the block 85 toward yoke arm 84 is limited by contact of surface 87 against the arm 84. On the other hand, the head of pin 89 serves as an outer limit stop for block 85 on moving away from arm 84.

In use of the described embodiment, the fiber 64 having its protective buffer covering removed from an extensive end portion is inserted into the enlarged opening 75 of the shaft 71 until the bare fiber extends outwardly of the opening 76 a sufficient amount to bridge the intervening space between the shaft end and the outer end of support 66. It is preferably at this time that the stop screw 83 engage the outer surface of rotor 63 preventing it from moving. Also, substantially simultaneously, as the bare fiber extends over the support surface 66 and through the V-block guide, the operator presses on the arm 96 of the L-shaped actuator with his thumb, for example, until it is moved to the dashed line position shown in Figure 3, thereby permitting the bare fiber to pass under the raised fiber holding pad. Also, as the operator presses on the arm 96 to raise the holding pad, this will move the transfer block 85 toward the yoke arm 84 placing the springs 91 under compression. On release of the L-shaped actuator 67, the coil spring 100 causes the fiber holding pad to engage the bare fiber and hold it against the flat surface of the support surface 66. Simultaneously with the fiber being clamped by the holding pad 99, release of the hand hold causes the springs 91 to place the bare fiber between the rotor and surface 66 in tension.

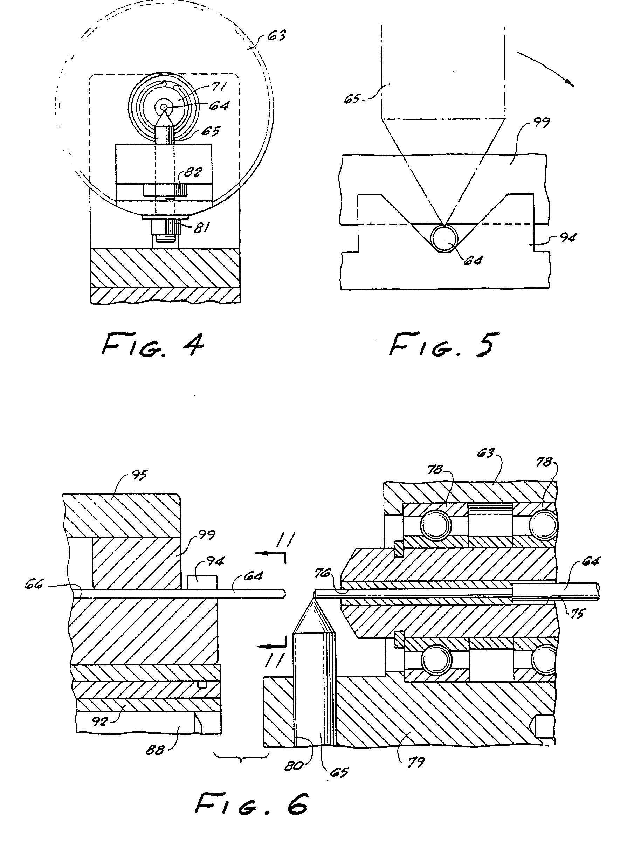

Next, the stop screw 83 is released and the rotor 63 rotated through a full 360 degrees to produce a score line on the fiber as shown in Figures 4 and 5. As soon as the score line is produced on the fiber and as a result of the tension placed in the fiber by springs 91, cleavage along the score line is produced along a face that is precisely at 90 degrees to the fiber long dimension. Also the cleavage is produced without torsion or twisting of the fiber.

Adjustment of nuts 81 and 82 not only locate the scoring point of the rod 80 vertically, but also permits rotating the tool to eliminate any inaccuracy due to concentricity misalignment. In the described embodiment, it is contemplated that the actual point of the scriber be constructed of a diamond tip which has been added to the relatively pointed end of rods 32 and 65, as the case may be.

**Claims**

1. Apparatus for cleaving an optical fiber (64) comprising:

shaft means (71) having an axially extending opening (75, 76) therethrough for receiving a fiber therein;

a transfer block (86) having a fiber support surface (66) thereon;

first spring means (91) resiliently urging the transfer block away from the shaft means;

lever means (96) pivotally mounted to said transfer block for selectively moving a fiber holding pad (99) toward and away from the transfer block support surface (66);

second spring means (100) interconnecting the lever means and the transfer block resiliently urging the fiber holding pad toward the support surface;

means limiting movement of a fiber in the shaft means (71) to permit pre-tensioning of the fiber by said first spring means (91) when held by said fiber holding pad (99); and

scoring means (65) rotatably mounted on said shaft means for contacting the circumferential periphery of the fiber and effecting a single score line completely around the fiber in a plane that is precisely perpendicular to the fiber longitudinal axis; the lever means, transfer block and both spring means being arranged such that the fiber holding pad and the transfer block can be operated by one hand.

2. Apparatus according to claim 1 in which the shaft means (71) is mounted onto a yoke arm (69), and the transfer block (86) is slidingly interconnected with a second yoke arm (84) by a plurality of pins (88, 89), and the first spring means (91) resiliently interrelates the second yoke arm and transfer block.

3. Apparatus according to claim 1 or claim 2 in which the shaft means opening has an entrance end portion (75) which has a cross-sectional dimension larger than that of a fiber (64) with protective cover and an exit end portion (76) of which the cross-sectional dimension is smaller than that of a fiber with protective cover.

4. Apparatus according to any preceding claim in which the scoring means (65) is carried by a rotor (63) rotatably journaled about the shaft means (71).

5. Apparatus according to any preceding claim in which the shaft means (71), transfer block (86), first spring means (91), lever means (96), second spring means (100) and scoring means (165) are all assembled on the end of a handle (61) such that the apparatus is hand operable.

6. Apparatus according to any preceding claim in which pressing of the lever means (96) releases the fiber holding pad (99) and causes movement of the transfer block (86) towards the shaft means (71) against the action of the first spring means (91).

7. Apparatus according to any preceding claim in which release of the lever means (96) moves the fiber holding pad (99) against the fiber (64) and releases the first spring means (91) to place the fiber in tension.

**Patentansprüche**

1. Gerät zum Trennen einer optischen Faser (64) mit
einer Schafteinrichtung (71), die für die Aufnahme einer Faser eine sich axial durch sie hindurch erstreckende Öffnung (75, 76) aufweist, ein Transportblock (86), der eine Faserauflagefläche (66) aufweist,
einer ersten Federeinrichtung (91), die den Transportblock elastisch von der Schafteinrichtung wegdrückt,
einer Hebeleinrichtung (96), die schwenkbar an dem Transportblock angebracht ist, um ein Faserhaltefutter (99) auf die Transportblock-Auflagefläche (66) zu und von ihr weg zu bewegen,
einer zweiten Federeinrichtung (100), welche die Hebeleinrichtung und den Transportblock verbindet und das Fasterhaltefutter elastisch in die Auflagefläche drückt,
Einrichtungen zum Begrenzen der Bewegung einer Faser in der Schafteinrichtung (71), um ein Vorspannen der Faser durch die erste Federeinrichtung (91) zu ermöglichen, wenn sie von dem Faserhaltefutter (99) gehalten wird, und
Einritzeinrichtungen (65), die drehbar an der Schafteinrichtung für den Kontakt mit dem Umfang der Faser angebracht sind und eine einzige Einritzlinie bewirken, die vollständig um die Faser in einer Ebene herumgeht, die genau senkrecht zu der Faserlängsachse ist, wobei die Hebeleinrichtung, der Transportblock und die beiden Federeinrichtungen so angeordnet sind, daß das Faserhaltefutter und der Transportblock von einer Hand betätigt werden können.

2. Gerät nach Anspruch 1, bei welchen die Schafteinrichtung (71) an einem Jocharm (69) angebracht ist und der Transportblock (86) gleitend verschiebbar mit einem zweiten Jocharm (84) durch eine Vielzahl von Zapfen (88, 89) verbunden ist, während die erste Federeinrichtung (91) in einer elastischen Zwischenbeziehung zu dem zweiten Jocharm und dem Transportblock steht.

3. Gerät nach Anspruch 1 oder 2, bei welchem die Schafteinrichtungsöffnung einer Eintrittsstirnabschnitt (75), der eine Querschnittsabmessung aufweist, die größer als die einer Faser (64) mit Schutzüberzug ist, und einen Austrittsstirnabschnitt (76) aufweist, dessen Querschnittsabmessung kleiner als die einer Faser mit Schutzüberzug ist.

4. Gerät nach einem der vorhergehenden Ansprüche, bei welchem die Einritzeinrichtung (65) von einem Rotor (63) getragen wird, der drehbar um die Schafteinrichtung (71) gelagert ist.

5. Gerät nach einem der vorhergehenden Ansprüche, bei welchem die Schafteinrichtung (71), der Transportblock (86), die erste Federeinrichtung (91), die Hebeleinrichtung (96), die zweite Federeinrichtung (100) und die Einritzeinrichtung (65) alle an dem Stirnende eines Handgriffs (61) derart montiert sind, daß das Gerät von Hand betätigbar ist.

6. Gerät nach einem der vorhergehenden Ansprüche, bei welchem einen pressen der Hebeleinrichtung (96) das Fasterhalterfutter (99) freigibt und eine Bewegung des Transportblocks (86) zur Schafteinrichtung (71) hin entgegen der Wirkung der ersten Federeinrichtung (91) verursacht.

7. Gerät nach einem der vorhergehenden Ansprüche, bei welchem die Freigabe der Hebeleinrichtung (96) das Faserhaltefutter (99) gegen die Faser (64) bewegt und die erste Federeinrichtung (91) freigibt, um die Faser in Spannung zu versetzen.

**Revendications**

1. Appareil de coupe d'une fibre optique 64, comportant: un arbre (71) avec une ouverture (75, 76) dirigée axialement pour recevoir une fibre; un bloc de transfert (86) portant une surface (66) de support de fibre; un premier dispositif élastique (91) qui rappelle élastiquement le bloc de transfert à l'opposé de l'arbre; un levier (96) monté pour pivoter sur ledit bloc de transfert afin de déplacer sélectivement un tampon (99) de maintien de fibre pour le rapprocher et l'écarter de la surface support (66) du bloc de transfert; un second dispositif élastique (100) accouplant le levier et le bloc de transfert, rappelant élastiquement le tampon de maintien de fibre vers la surface support; un dispositif limitant le mouvement d'une fibre dans l'arbre (71) pour permettre de pré-tensionner la fibre par ledit premier dispositif élastique (91) lorsqu'elle est maintenue par ledit tampon de maintien de fibre (99); et un dispositif de rayage (65) monté pour tourner sur ledit arbre et pour être en contact avec la périphérie circonférentielle de la fibre et effectuer une seule rayure complètement autour de la fibre dans un plan qui est perpendiculaire avec précision à l'axe longitudinal de la fibre, le levier, le bloc de transfert et les deux dispositifs élastiques étant agencés de manière que le tampon support de fibre et le bloc de transfert puissent être manoeuvrés par une main.

2. Appareil selon la revendication 1, dans lequel ledit arbre (71) est monté sur un bras d'étrier (69) et le bloc de transfert (86) est accouplé pour pouvoir coulisser avec un second bras d'étrier (84) par plusieurs broches (88, 89) et le premier dispositif élastique (91) accouplant élastiquement le second bras d'étrier et le bloc de transfert.

3. Appareil selon la revendication 1 ou 2, dans lequel l'ouverture de l'arbre comporte une partie d'extrémité d'entrée (75) avec une dimension transversale supérieure à celle d'une fibre (64) avec un revêtement protecteur et une partie d'extrémité de sortie (76) dont la dimension transversale est inférieure à celle d'une fibre avec un revêtement protecteur.

4. Appareil selon l'une quelconque des revendications précédentes, dans lequel le dispositif de rayage (65) est supporté par un rotor (63) qui peut tourner autour de l'arbre (71).

5. Appareil selon l'une quelconque des revendications précédentes, dans lequel l'arbre (71), le bloc de transfert (86), le premier dispositif élastique (91), le levier (96), le second dispositif élastique (100) et le dispositif de rayage (65) sont tous assemblés sur l'extrémité d'une poignée (61) de manière que l'appareil puisse être manoeuvré à la main.

6. Appareil selon l'une quelconque des revendications précédentes, dans lequel une pression sur le levier (96) libère le tampon (99) de maintien de fibre et provoque un mouvement du bloc de transfert (86) vers l'arbre (71) contre l'effet du premier dispositif élastique (91).

7. Appareil selon l'une quelconque des revendications précédentes, dans lequel le relâchement du levier (96) déplace le tampon (99) de maintien de fibre contre la fibre (64) et libère le premier dispositif élastique (91) pour placer la fibre sous tension.

FIG. 1

FIG. 2

FIG. 3

FIG. 4

FIG. 5

FIG. 6